# EUROPÄISCHE PATENTSCHRIFT

(11) **EP 3 239 250 B1**
(45) Veröffentlichungstag und Bekanntmachung des Hinweises auf die Patenterteilung: **23.01.2019**
(21) Anmeldenummer: 16167655.6
(22) Anmeldetag: 29.04.2016
(51) Int. Cl.: C09D 5/00, C09D 175/00

(54) **SELBSTHEILENDE ZUSAMMENSETZUNG, INSBESONDERE GEEIGNET ALS DICHTUNGS- UND BESCHICHTUNGSMASSE**
SELF-HEALING COMPOSITION, PARTICULARLY SUITABLE FOR USE AS SEALING AND COATING COMPOSITION
COMPOSITION AUTO-CURATIVE, EN PARTICULIER ADAPTEE EN TANT QUE MASSE DE REVETEMENT OU D'ETANCHEITE

(43) Veröffentlichungstag der Anmeldung: 01.11.2017
(73) Patentinhaber: STO SE & Co. KGaA, 79780 Stühlingen (DE)
(72) Erfinder: Fuchs, Berthold, 65207 Wiesbaden (DE); Baindl, Andreas, 78247 Hilzingen (DE)
(74) Vertreter: Gottschalk, Matthias

(56) Entgegenhaltungen:
- WO-A1-2007/143475
- WO-A1-2010/128007
- WO-A1-2014/150481
- WO-A1-2015/127981
- YUAN YAN CHAO ET AL: "Self-Healing Polymeric Materials Using Epoxy/Mercaptan as the Healant", MACROMOLECULES, AMERICAN CHEMICAL SOCIETY, US, Bd. 41, 27. Juni 2008 (2008-06-27), Seiten 5197-5202, XP002530957, ISSN: 0024-9297, DOI: 10.1021/MA800028D [gefunden am 2008-06-27]

## Beschreibung

Die vorliegende Erfindung betrifft eine selbstheilende Zusammensetzung, insbesondere geeignet als Dichtungs- und Beschichtungsmasse, ein Kit enthaltend die Komponenten dieser selbstheilenden Zusammensetzung, einen Baustoff enthaltend die selbstheilende Zusammensetzung und die Verwendung der selbstheilenden Zusammensetzung in einem Baustoff.

Selbstheilende Zusammensetzungen, beispielsweise Asphalt oder mikroverkapselte Autolacksysteme, sind grundsätzlich bekannt. Jedoch erreicht Asphalt nach der Selbstheilung aufgrund seiner hohen Plastizität nicht wieder seine ursprüngliche Form. Mikroverkapselte Autolacksysteme benötigen zur Selbstheilung die Zufuhr thermischer Energie (Aufheizung durch Sonnenlicht reicht i.d.R. nicht), eine Selbstheilung ohne weiteres Zutun findet hier also nicht statt.
Bei Dichtungs- und Beschichtungsmassen wäre eine Selbstheilung wünschenswert, wobei jedoch die Notwendigkeit der Zufuhr von thermischer Energie möglichst vermieden werden sollte, da Dichtungs- und Beschichtungsmassen häufig auf nicht beweglichen Objekten aufgebracht sind und die Zufuhr thermischer Energie das Aufstellen entsprechender Heizvorrichtungen und ggf. eine Einhausung des zu heilenden Objektes erforderlich wäre, um den Wärmeverlust niedrig zu halten. Bei Autolacksystemen ist es in der Regel unproblematisch, das Fahrzeug in einer entsprechenden Wärmekammer zu platzieren. Zudem muss nach der Selbstheilung die ursprüngliche Form so gut als möglich wieder erreicht werden, da es sonst ggf. zu Undichtigkeiten bei Dichtmassen oder "Löchern" bzw. dünnen Stellen in Beschichtungen kommen kann. Mit anderen Worten, die Plastizität muss hoch sein um ein Zusammenwachsen der Schnittkanten bei Raumtemperatur zu ermöglichen, wobei jedoch die Zusammensetzung gleichzeitig wieder (weitgehend) ihre ursprüngliche Form erreicht.
Es wurde überaschenderweise gefunden, dass durch die Kombination dreier, paralleler Reaktionssysteme der zuvor genannte Widerspruch zwischen Plastizität und Reaktionsfähigkeit gelöst werden konnte.

Daher stellt die vorliegende Erfindung eine Zusammensetzung bereit enthaltend
- ein blockiertes Di- oder Polyisocyanat (A)
- ein Polysulfidpolymer (B) enthaltend
   ∘ mindestens zwei Epoxidgruppen; und
   ∘ mindestens eine Schwefel-Schwefelbindung
- einen oder mehrere Reaktivverdünner (C)
- elementaren Schwefel (D)
- einen Aminhärter (E) enthaltend mindestens zwei an Stickstoff gebundene Waserstoffatome,
wie im Einzelnen im Patentanspruch 1 definiert.

Die erfindungsgemäße Zusammensetzung lässt sich beispielsweise als Dichtungsmasse verwenden, wobei ein Schnitt nach wenigen Tagen bei Raumtemperatur bereits vollständig geheilt ist und nicht mehr visuell erkennbar ist. Zudem hat die Zusammensetzung ihre ursprüngliche Form erhalten.
In der erfindungsgemäßen Zusammensetzung kann der Aminhärter und das Polysulfidpolymer mit seinen Epoxidgruppen mit dem blockierten Di- oder Polyisocyanat reagieren. Zudem wird davon ausgegangen, dass gleichzeitig die Schwefel-Schwefelbindungen der Polysulfidpolymere paarweise eine Metathesereaktion eingehen können und der Schwefel eine der Vulkanisation ähnliche Reaktion eingehen kann. Zudem ist aus der Literatur bekannt, dass Amine Schwefel in reaktive Bruchstücke zerlegen können, wie aus Dieter Neurey, Friedrich Asinger: "Schwefel in organischer Synthese" (Basen katalysierte Reaktion mit Schwefel unter milden Bedingungen), Westdeutscher Verlag, Opladen 1973 bekannt. Diese reaktiven Bruchstücke können dann mit Epoxiden und Isocyanaten ebenfalls reagieren. Zudem sind Reaktionen des (aktivierten) Schwefels mit der/den Schwefel-Schwefelbindung(en) des Polysulfidpolymeres zu erwarten.
Aufgrund der beobachteten Selbstheilung wird davon ausgegangen, dass die oben beschriebenen Reaktionen nicht bereits bei der Aushärtung vollständig abgeschlossen sind, sondern noch lange nach der Aushärtung ablaufen können und somit eine Selbstheilung auch noch lange nach Auftragung und Aushärtung der Zusammensetzung auftritt.

Die Zusammensetzung enthält erfindungsgemäß
- 3,0 bis 30 Gew.%, vorzugsweise 4,0 bis 26 Gew.%, stärker bevorzugt 5,0 bis 22 Gew.% an blockierten Di- oder Polyisocyanaten (A);
- 10 bis 50 Gew.%, vorzugsweise 14 bis 40 Gew.%, stärker bevorzugt 18 bis 36 Gew.% an Polysulfidpolymeren (B) enthaltend
   ∘ mindestens zwei Epoxidgruppen; und
   ∘ mindestens eine Schwefel-Schwefel-Bindung, wie im folgenden anhand der Formel (I) näher definiert;
- 4,0 bis 15 Gew.%, vorzugsweise 5,0 bis 12 Gew.%, stärker bevorzugt 6,0 bis 11 Gew.% an mindestens einem Reaktivverdünner (C);
- 3,0 bis 12 Gew.%, vorzugsweise 4,0 bis 10 Gew.%, stärker bevorzugt 5,0 bis 9,0 Gew.% an elementarem Schwefel;
- 7,0 bis 20 Gew.%, vorzugsweise 8,0 bis 16,0 Gew.%, stärker bevorzugt 9,0 bis 14,0 Gew.% an Aminhärter (E) enthaltend mindestens zwei an Stickstoff gebundene Waserstoffatome.
Alle Mengenangaben beziehen sich auf das Gesamtgewicht der Zusammensetzung.

### Blockiertes Di- oder Polyisocyanat (A)

Blockierte Di- und Polyisocyanate (A) sind aus dem Stand der Technik bekannt. Geeignete Di- und Polyisocyanate (A) sind Di- oder Polyisocyanate definiert durch eine empirische bzw. Strukturformel und üblicherweise aufweisend ein Molekulargewicht von nicht mehr als 800 g/mol, beispielsweise Diphenylmethandiisocyanat, Toluoldiisocyanat (TDI), Isophorondiisocyanat (IPDI), Hexamethylendiisocyanat (HDI), Trimere von Hexamethylendiisocyanat, bis(4-Isocyanatocyclohexyl)-Methan, bis(4-Isocyanatophenyl)methan, Tetramethylxylyloldiisocyanat und 1,4-Cyclohexandiisocyanat, Bis(Isocyanatocyclohexyl)-Methan und deren Derivate, 1,1,6,6-Tetramethyl-hexamethylendiisocyanat, p- oder m-Tetramethylxylyloldiisocyanat, 2,2',5-Trimethylhexandiisocyanat, aromatische Diisocyanate und deren Addukte und Mischungen hiervon.
Bevorzugt sind jedoch blockierte Di- und Polyisocyanate aufweisend ein zahlenmittleres Molekulargewicht von 1500 bis 5000 g/mol, vorzugsweise von 2000 bis 4000 g/mol stärker bevorzugt von 2500 bis 3500 g/mol.
Vorzugsweise werden blockierte Polyurethanpräpolymere verwendet, diese werden üblicherweise durch Umsetzung eines Di- oder Polyols mit Di- oder Polyisocyanat erhalten.
Geeignete Di- oder Polyisocyanate zur Herstellung eines Polyurethanpräpolymers sind die o.g. Di- oder Polyisocyanate definiert durch eine empirische bzw. Strukturformel üblicherweise aufweisend ein Molekulargewicht von nicht mehr als 800 g/mol, beispielsweise Diphenylmethandiisocyanat, Toluoldiisocyanat (TDI), Isophorondiisocyanat (IPDI), Hexamethylendiisocyanat (HDI), Trimere von Hexamethylendiisocyanat, bis(4-Isocyanatocyclohexyl)-Methan, bis(4-Isocyanatophenyl)methan, Tetramethylxylyloldiisocyanat und 1,4-Cyclohexandiisocyanat, Bis(Isocyanatocyclohexyl)-Methan und deren Derivate, 1,1,6,6-Tetramethyl-hexamethylendiisocyanat, p- oder m-Tetramethylxylyloldiisocyanat, 2,2' ,5-Trimethylhexandiisocyanat, aromatische Diisocyanate und deren Addukte und Mischungen hiervon.
Geeignete Di- oder Polyole sind Di- oder Polyole definiert durch eine empirische bzw. Strukturformel und üblicherweise aufweisend ein Molekulargewicht von nicht mehr als 450 g/mol, aber auch oligomere und polymere Polyole aufweisend ein zahlenmittleres Molekulargewicht von bis zu 5000 g/mol, beispielsweise 500 g/mol bis 4500 g/mol, bevorzugt 500 g/mol bis 3500 g/mol stärker bevorzugt 500 g/mol bis 2500 g/mol. Beispiele von oligomeren und polymeren Polyolen sind Hydroxyfunktionelle Polyether, Polyurethane, Polyester oder Polycarbonate, insbesondere bevorzugt sind Polyetherpolyole.

Falls das Di- oder Polyol Di- oder Polyole definiert durch eine empirische bzw. Strukturformel üblicherweise aufweisend ein Molekulargewicht von nicht mehr als 450 g/mol enthält oder aus ihnen besteht, enthält das Di- oder Polyol vorzugsweise 2 bis 6 Hydroxylgruppen, stärker bevorzugt 2 bis 4 Hydroxylgruppen und am stärksten bevorzugt 2 oder 3 Hydroxylgruppen pro Molekül.
Geeignete Di- oder Polyole sind Ethylenglycol, Propan- und Butanediol inklusive ihrer Isomere, 1,5-Pentanediol, 1,6-Hexanediol, 1,10-Decanediol, 1,12-Dodecanediol, Bisphenol A, Neopentyl glycol, Butylethylpropandiol, Cyclohexandiols inklusive seiner Isomere, Cyclohexandimethanol inklusive seiner Isomere, gesättigtes (hydrogeniertes) Bisphenol A, Tricyclodecandimethanol, dimere Fettalkohole, Glycerin, Trimethylolethan und Trimethylolpropan.
Beispiele von oligomeren und polymeren Polyolen sind telechele Poly(meth)acrylische diole, Polyesterpolyole, Polyetherpolyol, Polyurethanpolyole, Polycarbonatpolyol, jedes mit vorzugsweise einem zahlenmittleres Molekulargewicht von bis zu 5000 g/mol, beispielsweise 500 g/mol bis 4500 g/mol, bevorzugt 500 g/mol bis 3500 g/mol stärker bevorzugt 500 g/mol bis 2500 g/mol, wobei Polyetherpolyole bevorzugt sind.
Die Umsetzung der Isocyanatgruppen zu blockierten Isocyanatgruppen ist aus dem Stand der Technik bekannt. Das Isocyanat wird hierzu derart umgesetzt, dass eine Rückspaltung zum Isocyanat möglich ist. Hierfür werden häufig Monoalkohole eingesetzt, beispielsweise Nonylphenol.

### Polysulfidpolymer (B)

Das Polysulfidpolymer (B) enthält
∘ mindestens zwei Epoxidgruppen; und
∘ mindestens eine Schwefel-Schwefel-Bindung
Dabei sind mindestens zwei der Epoxidgruppen enthaltend in dem Polysulfidpolymer (B) terminale Epoxidgruppen (-CH(O)CH₂). D.h. sollte das Polysulfidpolymer (B) genau zwei Epoxidgruppen enthalten so sind beide Epoxidgruppen terminale Epoxidgruppen. Sollte das Polysulfidpolymer (B) mehr als zwei Epoxidgruppen enthalten so sind zwei dieser Epoxidgruppen terminale Epoxidgruppen und die weiteren Epoxidgruppen können, aber müssen keine terminalen Epoxidgruppen sein. Bevorzugt ist es jedoch, wenn alle Epoxidgruppen enthaltend im Polysulfidpolymer (B) terminale Epoxidgruppen sind.

Die mindestens eine Schwefel-Schwefel-Bindung ist üblicherweise eine -S-S-Bindung, d.h. beide Schwefelatome sind jeweils zweibindig.
Vorzugsweise ist die Schwefel-Schwefel-Bindung in dem oder einem der Monomere enthalten aus denen das Polysulfidpolymer (B) aufgebaut ist.

Das Polysulfidpolymer (B) ist vorzugsweise linear, aufweisend zwei terminale Epoxidgruppen, stärker bevorzugt ist das Polysulfidpolymer (B) linear, aufweisend zwei terminale Epoxidgruppen und die Schwefel-Schwefel-Bindung ist in dem oder einem der Monomere enthalten aus denen das Polysulfidpolymer (B) aufgebaut ist.

Das Polysulfidpolymer (B) ist erfindungsgemäß ein Polymer nach folgender Formel (I). 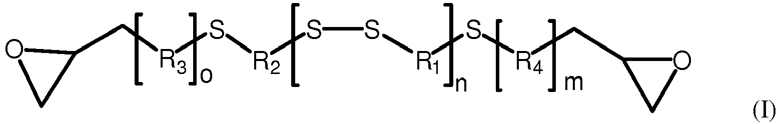 wobei
- n: eine ganze Zahl von 2 bis 80, vorzugsweise von 3 bis 50, stärker bevorzugt von 4 bis 30 ist;
- m: eine ganze Zahl von 1 bis 5, vorzugsweise von 1 bis 3, stärker bevorzugt 1 oder 2 ist, am stärksten bevorzugt ist m = 1;
- o: eine ganze Zahl von 1 bis 5, vorzugsweise von 1 bis 3, stärker bevorzugt 1 oder 2 ist, am stärksten bevorzugt ist o = 1;
- R₁: eine difunktionelle Gruppe enthaltend 2 bis 20 Kohlenstoffatome und 1 bis 5 Heteroatome ausgewählt aus N, P, S und O ist, vorzugsweise eine lineare Alkylenkette enthaltend 2 bis 20 Kohlenstoffatome und 1 bis 5 Heteroatome ausgewählt aus N, P, S und O wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O wobei die Heteroatome sich ausschließlich in der linearen Alkylenkette befinden
- R2: eine difunktionelle Gruppe enthaltend 2 bis 20 Kohlenstoffatome und 1 bis 5 Heteroatome ausgewählt aus N, P, S und O ist, vorzugsweise eine lineare Alkylenkette enthaltend 2 bis 20 Kohlenstoffatome und 1 bis 5 Heteroatome ausgewählt aus N, P, S und O wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O wobei die Heteroatome sich ausschließlich in der linearen Alkylenkette befinden
- R3: ist eine difunktionelle Gruppe enthaltend 15 bis 30 Kohlenstoffatome und 2 bis 6 Heteroatome, wobei die Heteroatome Sauerstoff sind und mindestens ein aromatischer Ring enthalten ist
- R4: ist eine difunktionelle Gruppe enthaltend 15 bis 30 Kohlenstoffatome und 2 bis 6 Heteroatome, wobei die Heteroatome Sauerstoff sind und mindestens ein aromatischer Ring enthalten ist.

Vorzugsweise enthält R1 in jeder der o.g. Varianten 2 bis 10 Kohlenstoffatome und 1 bis 3 Heteroatome, die stärker bevorzugt sind die Heteroatome Sauerstoff.

Vorzugsweise ist m = o, R1 = R2 und R3 = R4.

R3 und R4 sind vorzugsweise Ether enthaltend, vorzugsweise bestehend aus, einem aliphatischen Di- oder Polyol und einem aromatischen Diol. Aliphatisches Diol bedeutet, dass keine aromatischen Gruppen enthalten sind. In dem aromatischen Diol sind beide Hydroxylgruppen aromatische Hydroxylgruppen. Beispiele für aromatische Diole sind Bisphenole.

Besonders bevorzugt sind Polysulfidpolymere (B) nach folgender Formel (II) 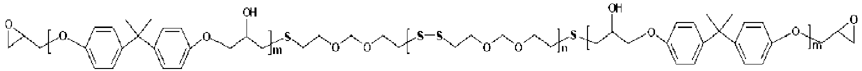 wobei
- n: eine ganze Zahl 4 bis 30 vorzugsweise 4 bis 20 ist
- m: eine ganze Zahl von 1 bis 5, vorzugsweise von 1 bis 3, stärker bevorzugt 1 oder 2 ist, am stärksten bevorzugt ist m = 1;

### Reaktivverdünner

Wie oben erwähnt enthält die Zusammensetzung einen oder mehrere Reaktivverdünner (C). Die Mengenangaben beziehen sich bei Vorliegen von mehreren Reaktivverdünnern auf deren Gesamtmenge. Reaktivverdünner sind im Stand der Technik bekannt. Üblicherweise enthält der Reaktivverdünner mindestens eine Epoxidgruppe, vorzugsweise 1 bis 3 Epoxidgruppen und besonders bevorzugt 1 bis 2 Epoxidgruppen.
Vorzugsweise enthält der Reaktivverdünner das Umsetzungsprodukt von mono- oder difunktionellen Alkoholen mit Epichlorhydrin oder das Umsetzungsprodukt von Mischungen von mono- oder difunktionellen Alkoholen mit Epichlorhydrin.
Der mono- oder difunktionelle Alkohol kann Dimere oder Oligomere enthalten oder daraus bestehen, wie beispielsweise Diethylenglycol, Dipropylenglycol, Ethylenglycololigoether oder Propylenglycololigoether.

Der mono- oder difunktionelle Alkohol enthält vorzugsweise 2 bis 30 Kohlenstoffatome, stärker bevorzugt 2 bis 20 Kohlenstoffatome, beispielsweise 2 bis 10 Kohlenstoffatome. Der mono- oder difunktionelle Alkohol ist vorzugsweise frei von aromatischen Gruppen.
Bevorzugt sind Umsetzungsprodukte von Ethylenglycol, Propylenglycol, Diethylenglycol oder Dipropylenglycol, oder deren C₁-C₆-Monoalkylethern und/oder von C₂ bis C₃₀-Monoalkoholen mit Epichlorhydrin. Bei der Umsetzung von Ethylenglycol, Propylenglycol, Diethylenglycol oder Dipropylenglycol bevorzugt Diethylenglycol oder Dipropylenglycol können oligomere Polyether entstehen, üblicherweise aufweisend ein Molekulargewicht von 300 bis 600 g/mol, vorzugsweise 320 bis 500 g/mol, stärker bevorzugt 340 bis 420 g/mol. Diese weisen üblicherweise und bevorzugt zwei Epoxidgruppen auf.
Die C₂ bis C₃₀-Monoalkohole sind vorzugsweise terminale C₂ bis C₃₀-Monoalkohole, stärker bevorzugt terminale C₂ bis C₂₀-Monoalkohole, noch stärker bevorzugt terminale C₆ bis C₂₀-Monoalkohole.
Wie oben erwähnt, kann die Zusammensetzung mehrere Reaktivverdünner enthalten.
In diesem Fall ist es bevorzugt, dass jeder der Reaktivverdünner ein Reaktivverdünner gemäß einer der oben genannten Ausführungsformen der Erfindung ist.
Vorzugsweise enthält der Reaktivverdünner (C) mindestens das Reaktionsprodukt eines difunktionellen Alkohols vorzugsweise enthaltend 2 bis 20 Kohlenstoffatome, stärker bevorzugt 2 bis 10 Kohlenstoffatome, oder einer seiner bevorzugten, oben definierten Ausführungsformen, mit Epichlorhydrin.
Zusätzlich kann der Reaktivverdünner (C) das Reaktionsprodukt eines mono- oder difunktionellen Alkohols vorzugsweise enthaltend 2 bis 30 Kohlenstoffatome, stärker bevorzugt 2 bis 20 Kohlenstoffatome, oder einer seiner bevorzugten, oben definierten Ausführungsformen, mit Epichlorhydrin enthalten. In diesem Fall sind die difunktionellen Alkohole, sofern vorhanden, unterschiedlich voneinander.
In einer bevorzugten Variante enthält der Reaktivverdünner (C)
- das Reaktionsprodukt eines difunktionellen Alkohols vorzugsweise enthaltend 2 bis 20 Kohlenstoffatome, stärker bevorzugt 2 bis 10 Kohlenstoffatome, oder einer seiner bevorzugten, oben definierten Ausführungsformen, mit Epichlorhydrin und
- das Reaktionsprodukt eines monofunktionellen Alkohols vorzugsweise enthaltend 2 bis 30 Kohlenstoffatome, stärker bevorzugt 2 bis 20 Kohlenstoffatome, noch stärker bevorzugt 6 bis 20 Kohlenstoffatome, oder einer seiner bevorzugten, oben definierten Ausführungsformen, mit Epichlorhydrin.
In dieser Variante beträgt das molare Verhältnis zwischen dem Reaktionsprodukt eines difunktionellen Alkohols und dem Reaktionsprodukt eines monofunktionellen Alkohols vorzugsweise von 20:1 bis 1:2, stärker bevorzugt von 15:1 zu 1:1.

### Elementarer Schwefel (D)

Üblicherweise wird der Schwefel (D) in seiner Ss-Modifikation eingesetzt. Die Verwendung seiner anderen Modifikationen ist jedoch ebenfalls möglich.

### Aminhärter (E)

"Mindestens zwei an Stickstoff gebundene Waserstoffatome" bedeutet in der vorliegenden Offenbarung, dass der Aminhärter mindestens zwei sekundäre Amine oder mindestens ein primäres Amin enthält. Natürlich kann der Aminhärter auch mindestens ein sekundäres Amin und mindestens ein primäres Amin enthalten. Übliche Aminhärter sind Mannichbasen, normalerweise hergestellt aus Phenol oder einem Phenolderivat, Formaldehyd und einer Verbindung aufweisend mindestens drei an Stickstoff gebundene Wasserstoffatome.
Als Phenolderivate werden auch Verbindungen angesehen, die mehr als eine Hydroxygruppe an demselben aromatischen Ring aufweisen, beispielsweise Kresol, und polycyclische aromatische Kohlenwasserstoffe beispielsweise Naphthalin, Anthracen etc. enthaltend eine oder mehrere Hydroxygruppe(n).
Insbesondere sind Phenolderivate geeignet die in einer ortho- oder para-position zu einer Hydroxygruppe keinen Substituenten tragen.
Die Verbindung aufweisend mindestens drei an Stickstoff gebundene Wasserstoffatome weist üblicherweise mindestens ein sekundäres Amin und mindestens ein primäres Amin auf. Sollten zwei oder mehr primäre Aminogruppen enthalten sein, wird üblicherweise nur eine der primären Aminogruppen zu einer Mannichbase reagiert.
Die Verbindung aufweisend mindestens drei an Stickstoff gebundene Wasserstoffatome kann auch ein Polyamin sein. Ein Polyamin ist üblicherweise eine gesättigtes, offenkettige oder cyclische organische Verbindung, mit endständigen Aminogruppen, unterbrochen von sekundären Aminogruppen. Falls ein Polyamin eingesetzt wird so enthält dies vorzugsweise nicht mehr als 10 Stickstoffatome, stärker bevorzugt nicht mehr als 7 Stickstoffatome und am stärksten bevorzugt nicht mehr als 4 Stickstoffatome.
Der Aminhärter weist vorzugsweise folgende Struktur (III) auf. 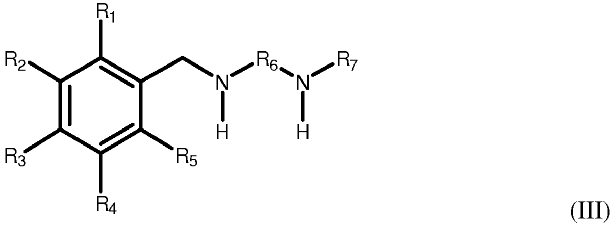 wobei
- R₁, R₃, R₅: unabhängig voneinander Wasserstoff, eine Hydroxylgruppe oder eine C₁ bis C₁₀ Hydrocarbylgruppe, vorzugsweise eine C₁ bis C₄ Hydrocarbylgruppe sind;
- R₂, R₄: unabhängig voneinander Wasserstoff oder eine C₁ bis C₁₀ Hydrocarbylgruppe, vorzugsweise eine C₁ bis C₄ Hydrocarbylgruppe sind;
- R₁ und R₂, R₂ und R₃, R₃ und R₄ und/oder R₄ und R₅: können paarweise jeweils Teil einer Ringstruktur sein, wobei die Ringstruktur aliphatisch oder aromatisch, vorzugsweise aromatisch, ist und ein fünf bis siebengliedriger, vorzugsweise sechsgliedriger Ring, besonders bevorzugt sechsgliedriger aromatischer Ring ist, wobei diese Ringe substituiert sein können mit C₁ bis C₄ Hydrocarbylgruppe und/oder Hydroxylgruppen, wobei die Summe an Kohlenstoffatomen in den von R₁ und R₂, R₂ und R₃, R₃ und R₄ und/oder R₄ und R₅ gebildeten Ringen und optionaler Substituenten jeweils 10 nicht übersteigt. Bilden beispielsweise R₁ und R₂ einen annelierten aromatischen Ring aus, der nicht substituiert ist beträgt die Summe an Kohlenstoffatomen in diesem Ring vier;
- R6: ist eine difunktionelle lineare, verzweigte oder cyclische aliphatische oder aromatische Gruppe aufweisend 2 bis 30 Kohlenstoffatome und optional bis zu 5 Heteroatome, vorzugsweise eine difunktionelle Gruppe aufweisend 2 bis 20 Kohlenstoffatome und optional bis zu 3 Heteroatome und besonders bevorzugt eine difunktionelle Gruppe aufweisend 4 bis 10 Kohlenstoffatome und optional bis zu 1 Heteroatom, vorzugsweise eine difunktionelle lineare oder verzweigte aliphatische Gruppe aufweisend 2 bis 30 Kohlenstoffatome und optional bis zu 5 Heteroatome, vorzugsweise eine difunktionelle Gruppe aufweisend 2 bis 20 Kohlenstoffatome und optional bis zu 3 Heteroatome und besonders bevorzugt eine difunktionelle Gruppe aufweisend 4 bis 10 Kohlenstoffatome und optional bis zu 1 Heteroatom, wobei die Heteroatome in R₆, wenn vorhanden, ausgewählt sind aus S, O und P, vorzugsweise sind die Heteroatome, wenn vorhanden O, besonders bevorzugt enthält R₆ keine Heteroatome
- R7: ist Wasserstoff, eine C₁ bis C₁₀ Hydrocarbylgruppe optional enthaltend bis zu 2 Heteroatome wobei die Heteroatome, wenn vorhanden, ausgewählt sind aus S, O und P, vorzugsweise sind die Heteroatome, wenn vorhanden O, besonders bevorzugt enthält die C₁ bis C₁₀ Hydrocarbylgruppe keine Heteroatome oder R₇ ist [R₈-N(H)]ₓ
wobei
R₈ dieselben Bedingungen erfüllt wie R₆, vorzugsweise ist
R₈ = R₆ und
x ist eine Zahl zwischen 1 und 3,
besonders bevorzugt ist R₇ Wasserstoff
mit der Bedingung, dass mindestens eine der Gruppen R₁, R₃ oder R₅ eine Hydroxylgruppe ist.

Bevorzugt sind Verbindungen gemäß Formel (III), wobei
- R₁, R₃, R₅: unabhängig voneinander Wasserstoff, eine Hydroxylgruppe oder eine C₁ bis C₁₀ Hydrocarbylgruppe, vorzugsweise eine C₁ bis C₄ Hydrocarbylgruppe sind;
- R₂, R₄: unabhängig voneinander Wasserstoff oder eine C₁ bis C₁₀ Hydrocarbylgruppe, vorzugsweise eine C₁ bis C₄ Hydrocarbylgruppe sind;
- R₆: ist eine difunktionelle lineare oder verzweigte aliphatische Gruppe aufweisend 4 bis 10 Kohlenstoffatome und optional bis zu 1 Heteroatom, das Heteroatom ausgewählt aus S, O und P bevorzugt O, besonders bevorzugt enthält R₆ keine Heteroatome
- R₇: ist Wasserstoff, eine C₁ bis C₁₀ Hydrocarbylgruppe enthaltend keine Heteroatome oder R₇ ist [R₈-N(H)]ₓ
wobei
R₈ dieselben Bedingungen erfüllt wie R₆, vorzugsweise ist
R₈ = R₆ und
x ist eine Zahl zwischen 1 und 3,
besonders bevorzugt ist R₇ Wasserstoff
mit der Bedingung, dass mindestens eine der Gruppen R₁, R₃ oder R₅ eine Hydroxylgruppe ist.

### Pigmente und Füllstoffe

Die Zusammensetzung kann Pigmente und/oder Füllstoffe enthalten.
Die Pigmente und/oder Füllstoffe werden vorzugsweise aus pyrogen gefällter Kieselsäure, gefällter Kieselsäure, Silizium-Aluminium-Mischoxiden, Carbonate, z.B. Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon ausgewählt. Stärker bevorzugt sind Titandioxid, Silikate und Carbonate.
Falls vorhanden beträgt die Menge an Pigmente üblicherweise 2,0 bis 15 Gew.%, bevorzugt sind 5,0 bis 10 Gew.%, stärker bevorzugt 5,5 bis 9,5 Gew.%.
Falls vorhanden beträgt die Menge an Füllstoffen üblicherweise 5,0 bis 25 Gew.%, bevorzugt sind 10 bis 20 Gew.%, stärker bevorzugt 13 bis 17 Gew.%.

### Übliche Zusatzstoffe

Derartige Zusatzstoffe sind in der Baustoffindustrie bekannt und sind beispielsweise Additive, Modifier, Lösemittel und Katalysatoren.
Die Gesamtmenge an diesen Zusatzstoffen beträgt üblicherweise nicht mehr als 15 Gew.%, vorzugsweise nicht mehr als 10 Gew.% bezogen auf die Zusammensetzung.

Die Zusammensetzung enthält vorzugsweise
- 3,0 bis 30 Gew.% (A), vorzugsweise 4,0 bis 26 Gew.% (A), stärker bevorzugt 5,0 bis 22 Gew.% (A)
- 10 bis 50 Gew.% (B), vorzugsweise 14 bis 40 Gew.% (B), stärker bevorzugt 18 bis 36 Gew.% (B)
- 4,0 bis 15 Gew.% (C), vorzugsweise 5,0 bis 12 Gew.% (C), stärker bevorzugt 6,0 bis 11 Gew.% (C)
- 3,0 bis 12 Gew.% (D), vorzugsweise 4,0 bis 10 Gew.% (D), stärker bevorzugt 5,0 bis 9,0 Gew.% (D)
- 7,0 bis 20 Gew.% (E), vorzugsweise 8,0 bis 16,0 Gew.% (E), stärker bevorzugt 9,0 bis 14,0 Gew.% (E)
- 2,0 bis 15 Gew.%, vorzugsweise 5,0 bis 10 Gew.%, stärker bevorzugt 5,5 bis 9,5 Gew.%. Pigmente
- 5,0 bis 25 Gew.%, vorzugsweise 10 bis 20 Gew.%, stärker bevorzugt 13 bis 17 Gew.% Füllstoffe
bezogen auf das Gesamtgewicht der Zusammensetzung.

Die vorliegende Erfindung ist ferner gerichtet auf ein Kit enthaltend einen ersten Behälter enthaltend
- ein blockiertes Di- oder Polyisocyanat (A)
- ein Polysulfidpolymer (B) wie oben schon mit Bezug auf die Formel (I) definiert;
- einen oder mehrere Reaktivverdünner (C)
- elementaren Schwefel (D) und
einen zweiten Behälter enthaltend
- einen Aminhärter (E) enthaltend mindestens zwei an Stickstoff gebundene Waserstoffatome
mit (A) bis (E) wie oben definiert,
wobei der erste Behälter
- 3,0 bis 30 Gew.% (A), vorzugsweise 4,0 bis 26 Gew.% (A), stärker bevorzugt 5,0 bis 22 Gew.% (A)
- 10 bis 50 Gew.% (B), vorzugsweise 14 bis 40 Gew.% (B), stärker bevorzugt 18 bis 36 Gew.% (B)
- 4,0 bis 15 Gew.% (C), vorzugsweise 5,0 bis 12 Gew.% (C), stärker bevorzugt 6,0 bis 11 Gew.% (C)
- 3,0 bis 12 Gew.% (D), vorzugsweise 4,0 bis 10 Gew.% (D), stärker bevorzugt 5,0 bis 9,0 Gew.% (D) enthält und
wobei der zweite Behälter
- 7,0 bis 20 Gew.% (E), vorzugsweise 8,0 bis 16,0 Gew.% (E), stärker bevorzugt 9,0 bis 14,0 Gew.% (E) enthält,
bezogen auf die in den Behältern des Kit enthaltenen Komponenten.

Beispielsweise enthält das Kit
einen ersten Behälter enthaltend
- 3,0 bis 30 Gew.% (A), vorzugsweise 4,0 bis 26 Gew.% (A), stärker bevorzugt 5,0 bis 22 Gew.% (A)
- 10 bis 50 Gew.% (B), vorzugsweise 14 bis 40 Gew.% (B), stärker bevorzugt 18 bis 36 Gew.% (B)
- 4,0 bis 15 Gew.% (C), vorzugsweise 5,0 bis 12 Gew.% (C), stärker bevorzugt 6,0 bis 11 Gew.% (C)
- 3,0 bis 12 Gew.% (D), vorzugsweise 4,0 bis 10 Gew.% (D), stärker bevorzugt 5,0 bis 9,0 Gew.% (D)
- 2,0 bis 15 Gew.%, vorzugsweise 5,0 bis 10 Gew.%, stärker bevorzugt 5,5 bis 9,5 Gew.%. Pigmente
- 5,0 bis 25 Gew.%, vorzugsweise 10 bis 20 Gew.%, stärker bevorzugt 13 bis 17 Gew.% Füllstoffe
einen zweiten Behälter enthaltend
- 7,0 bis 20 Gew.% (E), vorzugsweise 8,0 bis 16,0 Gew.% (E), stärker bevorzugt 9,0 bis 14,0 Gew.% (E)
bezogen auf die in den Behältern des Kit enthaltenen Komponenten wobei die Pigmente und Füllstoffe wie oben definiert sind.

Bevorzugte Ausführungsformen der Zusammensetzung der vorliegenden Erfindung sind auch bevorzugte Ausführungsformen des Kits gemäß der vorliegenden Erfindung und umgekehrt.

Die vorliegende Erfindung ist ferner gerichtet auf einen Baustoff, beispielsweise eine Beschichtungsmasse oder eine Dichtungsmasse enthaltend, vorzugsweise bestehend aus der Zusammensetzung oder dem Kit gemäß der vorliegenden Erfindung.

Bevorzugte Ausführungsformen der Zusammensetzung der vorliegenden Erfindung und des Kits gemäß der vorliegenden Erfindung sind auch bevorzugte Ausführungsformen des Baustoffs der vorliegenden Erfindung und umgekehrt.

Die Erfindung ist ferner gerichtet auf die Verwendung der Zusammensetzung gemäß der vorliegenden Erfindung oder dem Kit gemäß der vorliegenden Erfindung als Baustoff, vorzugsweise als Beschichtungsmasse oder als Dichtungsmasse, insbesondere als selbstheilende Beschichtungsmasse oder als selbstheilende Dichtungsmasse.

### Experimenteller Teil

Die folgenden Zusammensetzungen wurden hergestellt, wobei bei 25°C zunächst die Komponenten A und B in getrennten Gefäßen hergestellt wurden und anschließend kombiniert wurden.

| | | **RB1** | **EB2** | **EB3** |
|---|---|---|---|---|
| Komponente A | | | | |
| | blockiertes Polyurethanpräpolymer | 23,3 | 5,8 | 19,2 |
| | Polysulfidpolymer enthaltend Epoxidgruppen | | 35,5 | 20,7 |
| | Difunktioneller Reaktivverdünner | | 7,1 | 7,4 |
| | Monofunktioneller Reaktivverdünner | 7,8 | 0,9 | 3,0 |
| | Epoxidharz | 27,1 | | |
| | Schwefel | | 7,1 | 7,4 |
| | Weichmacher | 15,5 | | |
| | Füllstoff | | 14,2 | 14,7 |
| | Additive | 2,3 | 1,0 | 2,0 |
| | Farbpigmente | 1,5 | 7,1 | 7,4 |

| Komponente B | | | | |
|---|---|---|---|---|
| | Mannichbase | 22,5 | 12,8 | 10,9 |
| | Modifier | | 3,8 | 3,3 |
| | Lösemittel | | 2,1 | 1,8 |
| | Katalysator | | 2,6 | 2,2 |
| | | **100,0** | **100,0** | **100,0** |

| | | | | |
|---|---|---|---|---|
| RB Referenzbeispiel EB erfindungsgemäßes Beispiel | | | | |

### Verwendete Substanzen:

Ein blockiertes Polyurethanpräpolymer aufweisend ein Molekulargewicht von ca.
3000 g/mol, = blockiertes Di- oder Polyisocyanat
Polysulfidpolymer: Thioplast EPS 70 erhältlich von AkzoNobel Functional Chemicals GmbH
difunktioneller Reaktivverdünner: Reaktionsprodukt von Epichlorhydrin und Dipropylenglykol (MW 350 - 410 g/mol)
monofunktioneller Reaktivverdünner: Reaktionsprodukt von einer Mischung von C₁₂-C₁₄ Monoalkoholen mit Epichlorhydrin
Epoxidharz: Epilox A 19-00, erhältlich von Leuna Harze, ein Epoxidgruppenterminiertes Harz, frei von Schwefel;
Mannichbase: Kondensationsprodukt von Phenol, Formaldehyd und Trimethylhexamethylendiamine

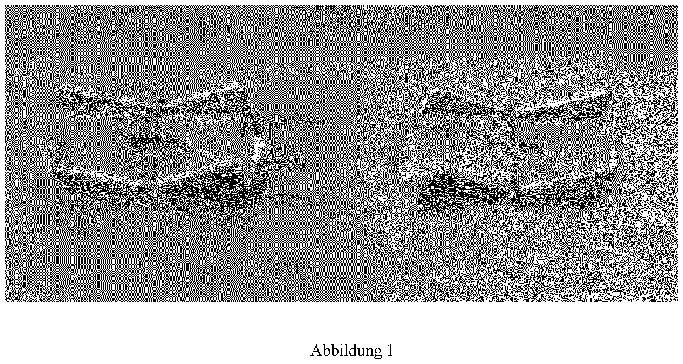

Die o.g. Beschichtungsmassen wurden in einer Schichtstärke von ca. 3 mm auf einer glatten, nicht adhäsiven Oberfläche aufgetragen und 48 h bei Raumtemperatur ausgehärtet. Anschließend wurde ein Streifen herausgeschnitten und in einen wie in Abbildung 1 gezeigten Metallrahmen eingespannt. Anschließend wurde mittels Rasierklinge ein ca. 1 mm tiefer Schnitt eingebracht.
Die darauf verwendeten Klammern stellen sicher, dass ein gleich breiter Streifen des zu untersuchenden Materials mit einem vergleichbaren Krümmungsradius eingespannt wird und das Material einer vergleichbaren Dehnung ausgesetzt wird. RB1 zeigte auch noch 62 Tagen bei Raumtemperatur keine sichtbare Veränderung. Bei EB2 war der Schnitt nach 62 Tagen bei Raumtemperatur fast vollständig geschlossen aber mit bloßem Auge noch sichtbar. Bei EB3 war der Schnitt bereits nach 7 Tagen bei Raumtemperatur vollständig geschlossen und mit bloßem Auge nicht mehr sichtbar. Zudem wird ein Weichmacher nicht benötigt.
Weiterhin wurde nach 4 Monaten Aushärtungszeit bei Raumtemperatur dem Material eine Schnittverletzung zugefügt. Die Vergleichsprobe RB1 zeigt weiterhin keine Regeneration der Verletzung. Bei der erfindungsgemäßen Probe EB3 war der Schnitt nach 7 Tagen bei Raumtemperatur fast vollständig geschlossen und kaum mehr erkennbar.

## Patentansprüche

1. Zusammensetzung enthaltend
- 3,0 bis 30 Gew.% eines blockierten Di- oder Polyisocyanats (A);
- 10 bis 50 Gew.% eines Polysulfidpolymers (B) nach folgender Formel (I) 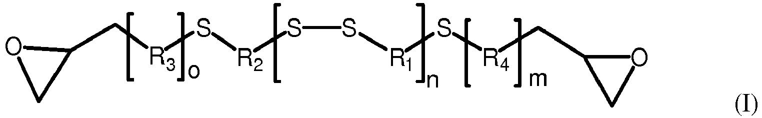 wobei
n eine ganze Zahl zwischen 3 und 80 ist;
m eine ganze Zahl von 1 bis 5 ist;
o eine ganze Zahl von 1 bis 5 ist;
R₁ eine difunktionelle Gruppe enthaltend 2 bis 20 Kohlenstoffatome und 1 bis 5 Heteroatome ausgewählt aus N, P, S und O ist;
R2 eine difunktionelle Gruppe enthaltend 2 bis 20 Kohlenstoffatome und 1 bis 5 Heteroatome ausgewählt aus N, P, S und O ist;
R3 eine difunktionelle Gruppe enthaltend 15 bis 30 Kohlenstoffatome und 2 bis 6 Heteroatome ist, wobei die Heteroatome Sauerstoff sind und mindestens ein aromatischer Ring enthalten ist
R4 eine difunktionelle Gruppe enthaltend 15 bis 30 Kohlenstoffatome und 2 bis 6 Heteroatome ist, wobei die Heteroatome Sauerstoff sind und mindestens ein aromatischer Ring enthalten ist;
- 4,0 bis 15 Gew.% eines oder mehrerer Reaktivverdünner (C)
- 3,0 bis 12 Gew.% elementaren Schwefel (D)
- 7,0 bis 20 Gew.% eines Aminhärters (E) enthaltend mindestens zwei an Stickstoff gebundene Wasserstoffatome.

2. Die Zusammensetzung nach Anspruch 1, bei der das Polysulfidpolymer (B) der Formel (I) entspricht, wobei
- n eine ganze Zahl zwischen 3 und 50, stärker bevorzugt 4 bis 30 ist;
- m eine ganze Zahl von 1 bis 3, bevorzugt 1 oder 2 ist, am stärksten bevorzugt ist m = 1;
- o eine ganze Zahl von 1 bis 3, bevorzugt 1 oder 2 ist, am stärksten bevorzugt ist o = 1;
- R₁ eine lineare Alkylenkette enthaltend 2 bis 20 Kohlenstoffatome und 1 bis 5 Heteroatome ausgewählt aus N, P, S und O ist, wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O, wobei die Heteroatome sich ausschließlich in der linearen Alkylenkette befinden;
- R2 eine lineare Alkylenkette enthaltend 2 bis 20 Kohlenstoffatome und 1 bis 5 Heteroatome ausgewählt aus N, P, S und O ist, wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O, wobei die Heteroatome sich ausschließlich in der linearen Alkylenkette befinden.

3. Die Zusammensetzung nach Anspruch 1, wobei das blockierte Di- oder Polyisocyanat (A) ein blockiertes Polyurethanpräpolymer ist.

4. Die Zusammensetzung nach einem der vorangegangenen Ansprüche, wobei mindestens zwei der Epoxidgruppen enthaltend in dem Polysulfidpolymer (B) terminale Epoxidgruppen sind.

5. Die Zusammensetzung nach einem der vorstehenden Ansprüche, wobei der Reaktivverdünner (C) mindestens eine Epoxidgruppe enthält.

6. Die Zusammensetzung nach einem der vorangegangenen Ansprüche, wobei der Aminhärter eine Mannichbase ist.

7. Ein Kit enthaltend
- einen ersten Behälter enthaltend eine erste Komponente einer Zusammensetzung, umfassend
- 3,0 bis 30 Gew.% eines blockierten Di- oder Polyisocyanats (A)
- 10 bis 50 Gew.% eines Polysulfidpolymers (B) nach folgender Formel (I) 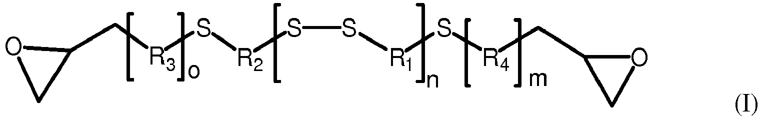 wobei
n eine ganze Zahl zwischen 3 und 80 ist;
m eine ganze Zahl von 1 bis 5 ist;
o eine ganze Zahl von 1 bis 5 ist;
R₁ eine difunktionelle Gruppe enthaltend 2 bis 20 Kohlenstoffatome und 1 bis 5 Heteroatome ausgewählt aus N, P, S und O ist;
R2 eine difunktionelle Gruppe enthaltend 2 bis 20 Kohlenstoffatome und 1 bis 5 Heteroatome ausgewählt aus N, P, S und O ist:
R3 eine difunktionelle Gruppe enthaltend 15 bis 30 Kohlenstoffatome und 2 bis 6 Heteroatome ist, wobei die Heteroatome Sauerstoff sind und mindestens ein aromatischer Ring enthalten ist
R4 eine difunktionelle Gruppe enthaltend 15 bis 30 Kohlenstoffatome und 2 bis 6 Heteroatome ist, wobei die Heteroatome Sauerstoff sind und mindestens ein aromatischer Ring enthalten ist;
- 4,0 bis 15 Gew.% eines oder mehrerer Reaktivverdünner (C)
- 3,0 bis 12 Gew.% elementaren Schwefel (D) und
einen zweiten Behälter enthaltend als zweite Komponente der Zusammensetzung
- 7,0 bis 20 Gew.% eines Aminhärters (E) enthaltend mindestens zwei an Stickstoff gebundene Wasserstoffatome;
alle Prozentangaben bezogen auf Gesamtgewicht der beide Komponenten enthaltenden Zusammensetzung.

8. Kit nach Anspruch 7, wobei
n eine ganze Zahl zwischen 3 und 50, bevorzugt 4 bis 30 ist;
m eine ganze Zahl von 1 bis 3, bevorzugt 1 oder 2 ist, am stärksten bevorzugt ist m = 1;
o eine ganze Zahl von 1 bis 3, bevorzugt 1 oder 2 ist, am stärksten bevorzugt ist
o = 1;
R1 eine lineare Alkylenkette enthaltend 2 bis 20 Kohlenstoffatome und 1 bis 5 Heteroatome ausgewählt aus N, P, S und O ist, wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O, wobei die Heteroatome sich ausschließlich in der linearen Alkylenkette befinden; und/oder
R2 eine lineare Alkylenkette enthaltend 2 bis 20 Kohlenstoffatome und 1 bis 5 Heteroatome ausgewählt aus N, P, S und O ist, wobei die Alkylenkette durch die Heteroatome unterbrochen sein kann, stärker bevorzugt eine lineare Alkylenkette enthaltend 2 bis 20 Kohlenstoffatome und 1 bis 5 Heteroatome ausgewählt aus N, P, S und O, wobei die Heteroatome sich ausschließlich in der linearen Alkylenkette befinden

9. Ein Baustoff, enthaltend die Zusammensetzung gemäß einem der Ansprüche 1 bis 6 oder den Kit gemäß Anspruch 7 oder 8.

10. Ein Baustoff, bestehend aus der Zusammensetzung gemäß einem der Ansprüche 1 bis 6 oder den Kit gemäß Anspruch 7 oder 8.

11. Der Baustoff gemäß Anspruch 9 oder 10, wobei der Baustoff eine Beschichtungsmasse oder eine Dichtungsmasse ist.

12. Verwendung der Zusammensetzung gemäß einem der Ansprüche 1 bis 6 oder dem Kit gemäß Anspruch 7 oder 8 als Baustoff, vorzugsweise als Beschichtungsmasse oder als Dichtungsmasse.

## Claims

1. A composition containing
- 3.0 % to 30 % by weight of a blocked di- or poly-isocyanate (A);
- 10 % to 50 % by weight of a polysulphide polymer (B) with the following formula (I): 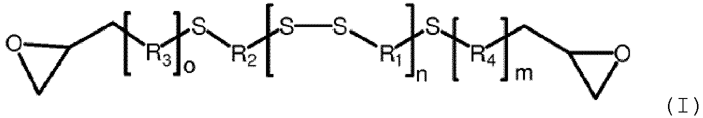 Wherein
n is a whole number between 3 and 80;
m is a whole number from 1 to 5;
o is a whole number from 1 to 5;
R₁ is a difunctional group containing 2 to 20 carbon atoms and 1 to 5 heteroatoms selected from N, P, S and 0;
R₂ is a difunctional group containing 2 to 20 carbon atoms and 1 to 5 heteroatoms selected from N, P, S and 0;
R₃ is a difunctional group containing 15 to 30 carbon atoms and 2 to 6 heteroatoms, wherein the heteroatoms are oxygen and it contains at least one aromatic ring;
R₄ is a difunctional group containing 15 to 30 carbon atoms and 2 to 6 heteroatoms, wherein the heteroatoms are oxygen and it contains at least one aromatic ring;
- 4.0 % to 15 % by weight of one or more reactive thinners (C);
- 3.0 % to 12 % by weight of elemental sulphur (D) ;
- 7.0 % to 20 % by weight of an amine hardener (E) containing at least two hydrogen atoms bonded to nitrogen.

2. The composition as claimed in claim 1, in which the polysulphide polymer (B) corresponds to formula (I) wherein
- n is a whole number between 3 and 50, more preferably 4 to 30;
- m is a whole number from 1 to 3, preferably 1 or 2; most preferably, m = 1;
- o is a whole number from 1 to 3, preferably 1 or 2; most preferably, o = 1;
- R₁ is a linear alkylene chain containing 2 to 20 carbon atoms and 1 to 5 heteroatoms selected from N, P, S and 0, wherein the alkylene chain may be interrupted by the heteroatoms, more preferably a linear alkylene chain containing 2 to 20 carbon atoms and 1 to 5 heteroatoms selected from N, P, S and 0, wherein the heteroatoms are exclusively located in the linear alkylene chain;
- R₂ is a linear alkylene chain containing 2 to 20 carbon atoms and 1 to 5 heteroatoms selected from N, P, S and 0, wherein the alkylene chain may be interrupted by the heteroatoms, more preferably a linear alkylene chain containing 2 to 20 carbon atoms and 1 to 5 heteroatoms selected from N, P, S and 0, wherein the heteroatoms are exclusively located in the linear alkylene chain.

3. The composition as claimed in claim 1, wherein the blocked di- or poly-isocyanate (A) is a blocked polyurethane prepolymer.

4. The composition as claimed in one of the preceding claims, wherein at least two of the epoxy groups contained in the polysulphide polymer (B) are terminal epoxy groups.

5. The composition as claimed in one of the preceding claims, wherein the reactive thinner (C) contains at least one epoxy group.

6. The composition as claimed in one of the preceding claims, wherein the amine hardener is a Mannich base.

7. A kit containing
- a first receptacle containing a first component of a composition, comprising
- 3.0 % to 30 % by weight of a blocked di- or poly-isocyanate (A);
- 10 % to 50 % by weight of a polysulphide polymer (B) with the following formula (I): 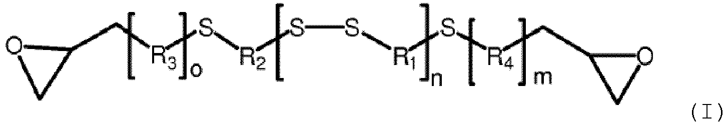 Wherein
n is a whole number between 3 and 80;
m is a whole number from 1 to 5;
o is a whole number from 1 to 5;
R₁ is a difunctional group containing 2 to 20 carbon atoms and 1 to 5 heteroatoms selected from N, P, S and 0;
R₂ is a difunctional group containing 2 to 20 carbon atoms and 1 to 5 heteroatoms selected from N, P, S and 0;
R₃ is a difunctional group containing 15 to 30 carbon atoms and 2 to 6 heteroatoms, wherein the heteroatoms are oxygen and it contains at least one aromatic ring;
R₄ is a difunctional group containing 15 to 30 carbon atoms and 2 to 6 heteroatoms, wherein the heteroatoms are oxygen and it contains at least one aromatic ring;
- 4.0 % to 15 % by weight of one or more reactive thinners (C);
- 3.0 % to 12 % by weight of elemental sulphur (D); and
a second receptacle containing, as the second component of the composition,
- 7.0 % to 20 % by weight of an amine hardener (E) containing at least two hydrogen atoms bonded to nitrogen;
all percentages being with respect to the total weight of the composition containing the two components.

8. The kit as claimed in claim 7, wherein
n is a whole number between 3 and 50, more preferably 4 to 30;
m is a whole number from 1 to 3, preferably 1 or 2; most preferably, m = 1;
o is a whole number from 1 to 3, preferably 1 or 2; most preferably, , o = 1;
R₁ is a linear alkylene chain containing 2 to 20 carbon atoms and 1 to 5 heteroatoms selected from N, P, S and 0, wherein the alkylene chain may be interrupted by the heteroatoms, more preferably a linear alkylene chain containing 2 to 20 carbon atoms and 1 to 5 heteroatoms selected from N, P, S and 0, wherein the heteroatoms are exclusively located in the linear alkylene chain;
R₂ is a linear alkylene chain containing 2 to 20 carbon atoms and 1 to 5 heteroatoms selected from N, P, S and 0, wherein the alkylene chain may be interrupted by the heteroatoms, more preferably a linear alkylene chain containing 2 to 20 carbon atoms and 1 to 5 heteroatoms selected from N, P, S and 0, wherein the heteroatoms are exclusively located in the linear alkylene chain.

9. A building material containing the composition as claimed in one of claims 1 to 6 or the kit as claimed in claim 7 or claim 8.

10. A building material consisting of the composition as claimed in one of claims 1 to 6 or the kit as claimed in claim 7 or claim 8.

11. The building material as claimed in claim 9 or claim 10, wherein the building material is a coating medium or a sealing compound.

12. Use of the composition as claimed in one of claims 1 to 6 or of the kit as claimed in claim 7 or claim 8, as a building material, preferably as a coating medium or a sealing compound.

## Revendications

1. Composition, contenant
- de 3,0 à 30 % en poids d'un diisocyanate ou polyisocyanate (A) bloqué ;
- de 10 à 50 % en poids d'un polymère polysulfuré (B) de la formule suivante (I) 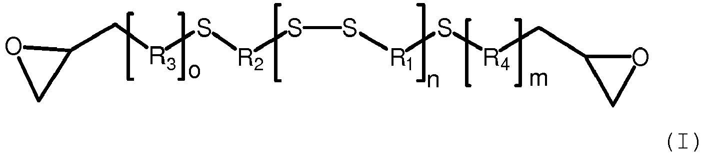
n étant un nombre entier compris entre 3 et 80 ;
m étant un nombre entier de 1 à 5 ;
o étant un nombre entier de 1 à 5 ;
R₁ étant un groupe difonctionnel contenant de 2 à 20 atomes de carbone et de 1 à 5 hétéroatomes, choisis parmi N, P, S et 0 ;
R₂ étant un groupe difonctionnel contenant de 2 à 20 atomes de carbone et de 1 à 5 hétéroatomes choisis parmi N, P, S et 0 ;
R₃ étant un groupe difonctionnel contenant de 15 à 30 atomes de carbone et de 2 à 6 hétéroatomes, les hétéroatomes étant de l'oxygène et contenant au moins un cycle aromatique ;
R₄ étant un groupe difonctionnel contenant de 15 à 30 atomes de carbone et de 2 à 6 hétéroatomes, les hétéroatomes étant de l'oxygène et contenant au moins un cycle aromatique ;
- de 4,0 à 15 % en poids d'un ou de plusieurs diluants réactifs (C)
- de 3,0 à 12 % en poids de soufre élémentaire (D)
- de 7,0 à 20 % en poids d'un durcisseur aminé (E) contenant au moins deux atomes d'hydrogène liés à l'azote.

2. La composition selon la revendication 1, dans laquelle le polymère polysulfuré (B) correspond à la formule (I),
- n étant un nombre entier compris entre 3 et 50, de manière plus préférentielle entre 4 à 30 ;
- m étant un nombre entier de 1 à 3, de préférence 1 ou 2, de la manière la plus préférentielle, m étant = 1 ;
- o étant un nombre entier de 1 à 3, de préférence 1 ou 2, de la manière la plus préférentielle, o étant = 1 ;
- R₁ étant une chaîne alkylène linéaire contenant de 2 à 20 atomes de carbone et de 1 à 5 hétéroatomes choisis parmi N, P, S et 0, la chaîne alkylène pouvant être interrompue par les hétéroatomes, de manière plus préférentielle une chaîne alkylène linéaire contenant de 2 à 20 atomes de carbone et 1 à 5 hétéroatomes choisis parmi N, P, S et 0, les hétéroatomes se trouvant exclusivement dans la chaîne alkylène linéaire ;
- R₂ étant une chaîne alkylène linéaire contenant de 2 à 20 atomes de carbone et de 1 à 5 hétéroatomes choisis parmi N, P, S et 0, la chaîne alkylène pouvant être interrompue par les hétéroatomes, de manière plus préférentielle une chaîne alkylène linéaire contenant de 2 à 20 atomes de carbone et de 1 à 5 hétéroatomes choisis parmi N, P, S et 0, les hétéroatomes se trouvant exclusivement dans la chaîne alkylène linéaire.

3. La composition selon la revendication 1, le diisocyanate ou polyisocyanate (A) bloqué (A) étant un prépolymère polyuréthane bloqué.

4. La composition selon l'une quelconque des revendications précédentes, au moins deux des groupes époxydes contenus dans le polymère polysulfuré (B) étant des groupes époxydes terminaux.

5. La composition selon l'une quelconque des revendications précédentes, le diluant réactif (C) contenant au moins un groupe époxyde.

6. La composition selon l'une quelconque des revendications précédentes, le durcisseur aminé étant base de Mannich.

7. Un kit, contenant
- un premier récipient contenant un premier composant d'une composition, comprenant
- de 3,0 à 30 % en poids d'un diisocyanate ou polyisocyanate (A) bloqué ;
- de 10 à 50 % en poids d'un polymère polysulfuré (B) de la formule suivante (I) 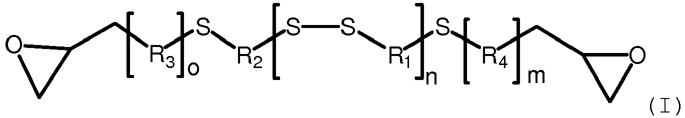
n étant un nombre entier compris entre 3 et 80 ;
m étant un nombre entier de 1 à 5 ;
o étant un nombre entier de 1 à 5 ;
R₁ étant un groupe difonctionnel contenant de 2 à 20 atomes de carbone et de 1 à 5 hétéroatomes, choisis parmi N, P, S et 0 ;
R₂ étant un groupe difonctionnel contenant de 2 à 20 atomes de carbone et de 1 à 5 hétéroatomes choisis parmi N, P, S et 0 ;
R₃ étant un groupe difonctionnel contenant de 15 à 30 atomes de carbone et de 2 à 6 hétéroatomes, les hétéroatomes étant de l'oxygène et contenant au moins un cycle aromatique ;
R₄ étant un groupe difonctionnel contenant de 15 à 30 atomes de carbone et de 2 à 6 hétéroatomes, les hétéroatomes étant de l'oxygène et contenant au moins un cycle aromatique ;
- de 4,0 à 15 % en poids d'un ou de plusieurs diluants réactifs (C)
- de 3,0 à 12 % en poids de soufre élémentaire (D) et
un deuxième récipient, contenant en tant que deuxième composant de la composition
- de 7,0 à 20 % en poids d'un durcisseur aminé (E) contenant au moins deux atomes d'hydrogène liés à l'azote ;
tous les pourcentages étant rapportés au poids total de la composition contenant les deux composants.

8. Kit selon la revendication 7,
n étant un nombre entier compris entre 3 et 50, de préférence de 4 à 30 ;
m étant un nombre entier de 1 à 3, de préférence 1 ou 2, de la manière la plus préférentielle, m étant = 1 ;
o étant un nombre entier de 1 à 3, de préférence 1 ou 2, de la manière la plus préférentielle, o étant = 1 ;
R₁ étant une chaîne alkylène linéaire contenant de 2 à 20 atomes de carbone et de 1 à 5 hétéroatomes choisis parmi N, P, S et 0, la chaîne alkylène pouvant être interrompue par les hétéroatomes, de manière plus préférentielle une chaîne alkylène linéaire contenant de 2 à 20 atomes de carbone et de 1 à 5 hétéroatomes choisis parmi N, P, S et 0, les hétéroatomes se trouvant exclusivement dans la chaîne alkylène linéaire ; et/ou
R₂ étant une chaîne alkylène linéaire contenant de 2 à 20 atomes de carbone et de 1 à 5 hétéroatomes choisis parmi N, P, S et 0, la chaîne alkylène pouvant être interrompue par les hétéroatomes, de manière plus préférentielle une chaîne alkylène linéaire contenant de 2 à 20 atomes de carbone et de 1 à 5 hétéroatomes choisis parmi N, P, S et 0, les hétéroatomes se trouvant exclusivement dans la chaîne alkylène linéaire.

9. Un matériau de construction, contenant la composition selon l'une quelconque des revendications 1 à 6 ou le kit selon la revendication 7 ou 8.

10. Un matériau de construction, constitué de la composition selon l'une quelconque des revendications 1 à 6 ou du kit selon la revendication 7 ou 8.

11. La matériau de construction selon la revendication 9 ou 10, le matériau de construction étant une masse de revêtement ou une masse d'étanchéité.

12. Utilisation de la composition selon l'une quelconque des revendications 1 à 6 ou du kit selon la revendication 7 ou 8 en tant que matériau de construction, de préférence en tant que masse de revêtement ou que masse d'étanchéité.
